# EUROPÄISCHE PATENTSCHRIFT

(11) **EP 3 245 425 B1**
(45) Veröffentlichungstag und Bekanntmachung des Hinweises auf die Patenterteilung: **27.02.2019**
(21) Anmeldenummer: 15700554.7
(22) Anmeldetag: 13.01.2015
(51) Int. Cl.: F16H 39/24

(54) **HYDRAULISCHER DREHMOMENTWANDLER**
HYDRAULIC TORQUE CONVERTER
CONVERTISSEUR DE COUPLE HYDRAULIQUE

(43) Veröffentlichungstag der Anmeldung: 22.11.2017
(73) Patentinhaber: Minichiello, Gino, 6315 Oberägeri (CH)
(72) Erfinder: WYSER, Hans Ulrich, verstorben (CH)
(74) Vertreter: Liebetanz, Michael
(86) Internationale Anmeldenummer: PCT/EP2015/050446
(87) Internationale Veröffentlichungsnummer: WO 2016/112955

(56) Entgegenhaltungen:
- DE-A1- 1 936 181
- FR-A1- 2 530 769
- GB-A- 853 667
- GB-A- 2 167 164
- US-A- 2 384 218
- US-A- 3 740 954
- US-A- 3 808 814

## Beschreibung

### Technisches Gebiet

Die Erfindung betrifft einen hydraulischen Drehmomentwandler gemäss Oberbegriff des Patentanspruches 1.

### Stand der Technik

Bei den üblicherweise verwendeten Drehmomentwandlern oder Getrieben erfolgt die Kraftübertragung von einer Antriebswelle zu einer Abtriebswelle über Zahnräder, Kupplungen oder Zwischenwellen. Diese Getriebe sind aufgrund der aufwendigen Mechanik und dem hochbeanspruchbaren Material relativ teuer und zudem recht schwer.

Es sind deshalb verschiedenartige stufenlose Getriebe bekannt, bei welchen die Übertragung des Drehmomentes mittels eines Strömungsmittels erfolgt. So offenbart DE-2'431'555 ein hydrodynamisches Getriebe, bei welchem ein Ölstrom, der durch eine von einer Kraftmaschine angetriebenen Pumpe erzeugt wird, in eine drehende Bewegung umgewandelt wird. EP-A-0'259'590 beschreibt ein regelbares hydrostatisches Getriebe mit einer radial ineinandergebauten Pumpen/Motoreinheit mit gegenseitig einstellbaren Fördervolumen. DE-A-1'962'613 offenbart ein hydrostatisches Getriebe, bei welchem Pumpe und Motor als Flügelzellenpumpe resp. - motor ausgebildet sind. Auch hier ist die Pumpe und der Motor radial ineinander in einem Zylinder angeordnet. Dabei weist der Zylinder eine äussere und eine innere Lauffläche auf, welche exzentrisch angeordnet sind, um die Fördermenge und somit das Drehmoment zu regeln.

Diese hydraulischen Getriebe sind jedoch relativ kompliziert aufgebaut, schwierig zu regeln und weisen eine relativ geringe Leistungsübertragung auf.

Ferner ist aus EP 1'001'172 eine Flügelzellenpumpe bekannt, welche einen Stator aufweist, der innerhalb eines Lagergehäuses radial zu einer Antriebswelle verstellbar gelagert ist.

Ein hydraulischer Drehmomentwandler mit den Merkmalen des Oberbegriffs des Anspruchs 1 ist aus der DE 1 936 181 bekannt. Ein weiterer hydraulischer Drehmomentwandler ist aus der GB 853,667 bekannt.

### Darstellung der Erfindung

Ausgehend von diesem Stand der Technik ist es eine Aufgabe der Erfindung, einen hydraulischen Drehmomentwandler zu schaffen, welcher kostengünstig herstellbar und einfach zu regeln ist.

Diese Aufgabe löst ein hydraulischer Drehmomentwandler mit den Merkmalen des Patentanspruches 1.

Der erfindungsgemässe Drehmomentwandler weist zwei Flügelzellen-Stator/Rotorsätze auf, welche in Achsrichtung hintereinander angeordnet sind, wobei die Statoren druck- und/oder fliehkraftbedingt in ihrem Abstand zum jeweils zugehörigen Rotor in mindestens einer radialen Richtung veränderbar sind und so die Grösse der Pumpkammer verändern. Dabei sind auf beiden Seiten der zwei Stator/Rotorsätzen je eine Pumpen- bzw. Motordruckplatte angeordnet, wobei zwischen den zwei Stator/Rotorsätzen eine mittlere Steuerplatte angeordnet ist. Die Druckplatten und die Steuerplatte weisen mindestens jeweils einen in Umfangsrichtung der Rotoren verlaufenden Längskanal auf, wobei die durch die Steuerplatte verlaufenden Längskanäle die hydraulische Verbindung zwischen den Stator/Rotorsätzen bilden. Die Mittel zur Regelung des Abstandes umfassen erfindungsgemäss mindestens einen Regelkolben und es ist mindestens eine Regelungs-Durchgangsöffnung im Stator angeordnet, welche den zugehörigen Rotor hydraulisch mit dem Regelkolben verbindet.

Durch eine Regelung dieser Veränderung lässt sich ein stufenlos veränderbares Getriebe schaffen. Die Veränderung des radialen Abstandes bedingt eine Veränderung der durch die Pumpkammern förderbaren Fördermenge der Pumpflüssigkeit und somit eine Veränderung des Antriebs des zweiten Stator/Rotorsatzes.

In einer bevorzugten Ausführungsform besteht der veränderbare Stator aus mindestens zwei Teilstücken, welche über Verzahnungen miteinander in Eingriff bringbar sind.

Die Regelung des Abstandes des Stators zum Rotor und somit die Regelung des von einer Antriebswelle auf eine Abtriebswelle übertragenen Drehmomentes erfolgt erfindungsgemäss einerseits mittels Rückstellfedern, welche den Stator in radialer Richtung hin zur Achse der Wellen kraftbeaufschlagen, und andererseits mittels Regelkolben, welche im Falle von Beschleunigungen und Verzögerungen des Drehmomentwandlers auf den Stator wirken und die Pumpkammer in ihrer Grösse verändern.

Die erfindungsgemässe Vorrichtung weist eine geringe Baugrösse, ein relativ geringes Eigengewicht und eine optimal anpassbare Kraftübertragung auf.

Weitere vorteilhafte Ausführungsformen gehen aus den abhängigen Patentansprüchen hervor.

### Kurze Beschreibung der Zeichnung

Im folgenden wird der Erfindungsgegenstand anhand von bevorzugten Ausführungsbeispielen, welche in der beiliegenden Zeichnung dargestellt sind, erläutert. Es zeigen:
- Figur 1: einen Längsschnitt durch einen erfindungsgemässen Drehmomentwandler;
- Figur 2: einen Querschnitt durch den Drehmomentwandler gemäss Figur 1 entlang A-A;
- Figur 3a: eine Ansicht eines ersten Teilstückes eines erfindungsgemässen Stators;
- Figur 3b: einen Teilschnitt eines Details gemäss Figur 3a;
- Figur 4: eine Ansicht eines Rotors;
- Figur 5: einen Querschnitt durch eine Steuerpumpe;
- Figur 6a: einen Querschnitt durch eine pumpenseitige Steuerplatte;
- Figur 6b: eine Ansicht der Steuerplatte gemäss Figur 6a von einer ersten Seite;
- Figur 6c: eine Ansicht der Steuerplatte gemäss Figur 6a von einer zweiten Seite;
- Figur 7: eine Ansicht eines Steuergehäuses und
- Figur 8: eine schematische Darstellung des erfindungsgemässen Drehmomentwandlers im Zustand der Beschleunigung.

### Wege zur Ausführung der Erfindung

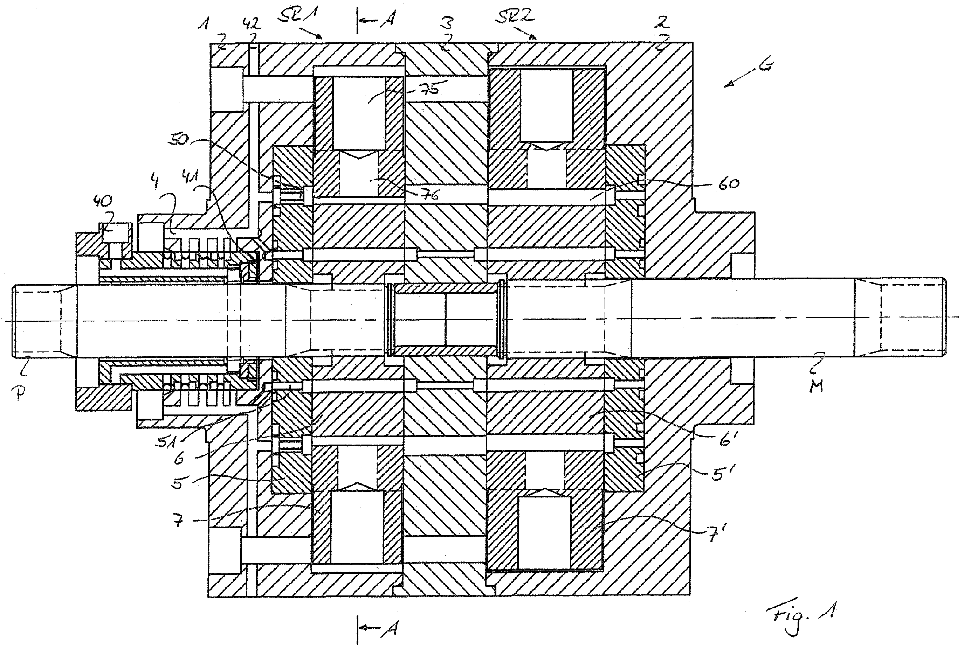

In Figur 1 ist ein erfindungsgemässer stufenlos regelbarer hydraulischer Drehmomentwandler, auch Zellenwandler genannt, dargestellt. Er weist ein Gehäuse G auf, welches auf einer Seite von einer Antriebs- oder Pumpenwelle P und auf der anderen Seite von einer Abtriebs- oder Motorwelle M durchsetzt ist. Die zwei Wellen nähern sich in der Mitte des Gehäuses G aneinander an, ohne jedoch miteinander verbunden zu sein. Sie bilden eine gemeinsame Achse.

Im Gehäuse G ist sind mindestens zwei, hier genau zwei Flügelzellen-Stator/Rotorsätze SR1, SR2 mit äusserer Flügelkolbenabstützung angeordnet. Sie sind in Achsrichtung hintereinander angeordnet und vorzugsweise identisch aufgebaut. Der erste Flügelzellen-Stator/Rotorsatz SR1 bildet eine Flügelzellenpumpe und ist in einem Pumpengehäuse 1 gelagert, der zweite Flügelzellen-Stator/Rotorsatz SR2 bildet einen Flügelzellenmotor und ist in einem Motorgehäuse 2 gelagert. Die zwei Gehäuse 1, 2 sind im wesentlichen spiegelsymmetrisch aufgebaut, wobei je nach gewünschtem Übersetzungsverhältnis der Flügelzellenmotor eine grössere Masse aufweist als die Flügelzellenpumpe. Das hier dargestellte Beispiel ist für Lastwagen geeignet. Zwischen dem Pumpengehäuse 1 und dem Motorgehäuse 2 ist ein Steuergehäuse 3 angeordnet.

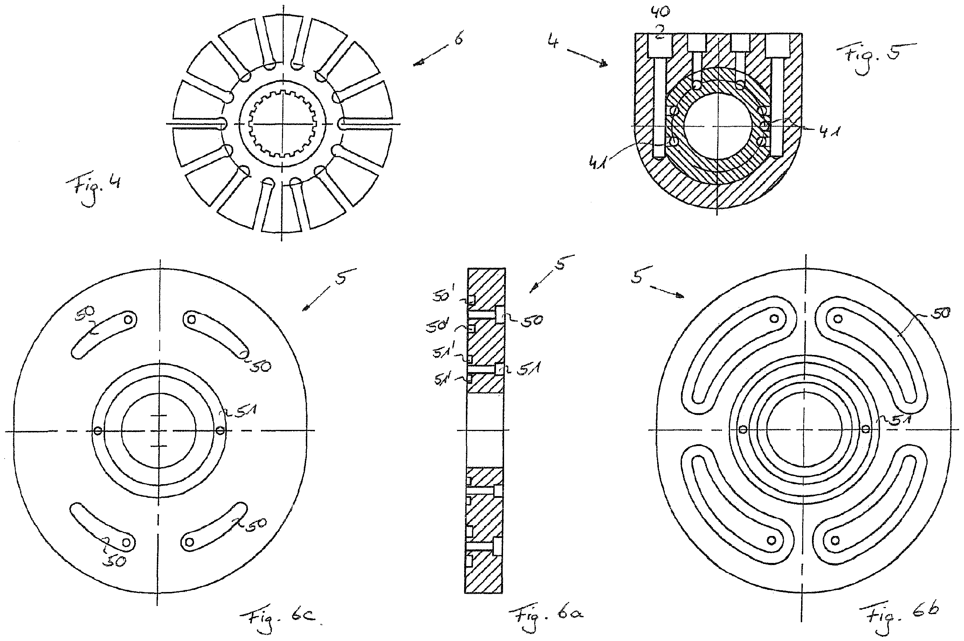

Im Pumpengehäuse 1 ist eine Steuerpumpe 4 angeordnet, welche von der Antriebswelle P durchsetzt ist. Diese Steuerpumpe 4 ist in Figur 5 im Querschnitt dargestellt. Sie verfügt über Eingangsöffnungen 40, um eine Pumpenflüssigkeit, vorzugsweise, Öl, von aussen in die Steuerpumpe 4 und Auslassöffnungen 41, um das Öl in den ersten Stator/Rotorsatz RS1 zu leiten. Ferner ist ein Steuerkanal 42 vorhanden. Diese Steuerpumpe 4 erzeugt und regelt den beim Anfahren des Wandlers notwendigen Steuerdruck.

Das Grundprinzip ist wie folgt : Die Antriebswelle P treibt einen Rotor 6 des ersten Stator/Rotorsatzes SR1 an. Dieser gibt das Drehmoment an das unter Druck stehende Pumpenfluid weiter, welches den Rotor 6' des zweiten Stator/Rotorsatzes SR2 antreibt, welcher wiederum mit der Abtriebswelle M starr verbunden ist. Durch Regelung der Menge des Pumpenfluids lässt sich ein stufenloses Getriebe schaffen. Erfindungsgemäss erfolgt diese Regelung, wie nachfolgend genauer erläutert wird, durch eine druck- und/oder fliehkraftbedingte Änderung des Abstandes zwischen Rotor 6 und Stator 7. Dadurch, dass sich die zwei Statoren 7,7' der zwei Sätze mittels der Regelung unterschiedlich öffnen lassen, kann jede beliebige Übersetzung eingestellt werden.

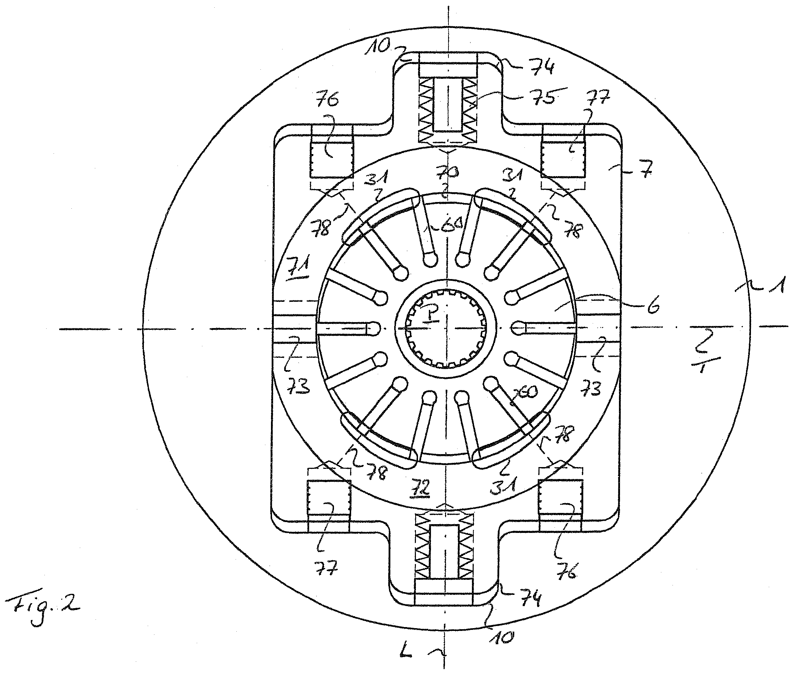

Das Pumpengehäuse 1 weist einen im wesentlichen runden Aussenumfang auf. Im Innern weist das Gehäuse 1 einen in zwei Stufen unterteilten Hohlraum auf. Die der Steuerpumpe 4 benachbarte Stufe weist eine abgeflachte Kreisform auf und dient zur rotationsfixierten Aufnahme einer pumpenseitigen Druckplatte 5 mit Steuerfunktion. Die Druckplatte gewährleistet eine spaltfreie Abdichtung zwischen Rotor und Stator. Die zweite Stufe weist einen im wesentlichen rechteckigen Querschnitt auf, wobei sie in Längsrichtung mit zwei einander gegenüberliegenden Nasen 10 verlängert ist. Dies ist in Figur 2 sichtbar. In dieser Stufe ist der erste Flügelzellen-Stator/Rotorsatz SR1 angeordnet.

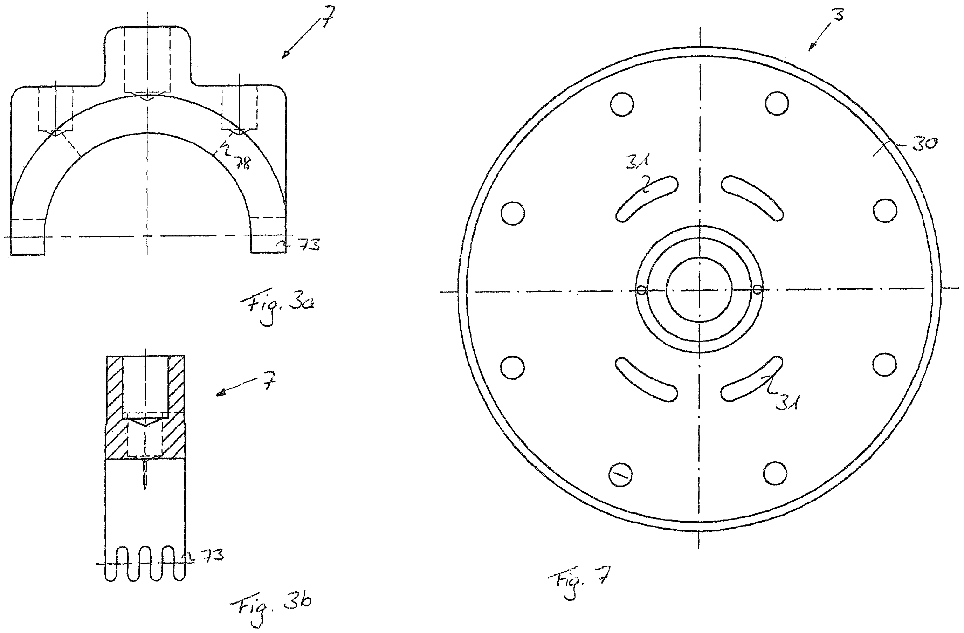

Wie wiederum in Figur 1 sichtbar ist, folgt das Steuergehäuse 3 mit einer in Figur 7 dargestellten lagefixierten mittleren Steuerplatte 30. Anschliessend folgt das ebenfalls zwei Stufen aufweisende und bis auf die nicht vorhandene Ausnehmung für eine Steuerpumpe symmetrisch zum Pumpengehäuse 1 aufgebaute Motorgehäuse 2. Dabei ist benachbart zur Steuerplatte 30 der zweite Stator/Rotorsatz SR2 und anschliessend eine motorseitige Druckplatte 5' rotationsfixiert angeordnet, welche vorzugsweise identisch wie die pumpenseitige Druckplatte 5 aufgebaut ist. Die Abtriebswelle M durchsetzt das Motorgehäuse 2.

In Figur 2 ist ein Querschnitt durch das Pumpengehäuse 1 dargestellt. Der Querschnitt durch die entsprechende Stelle im Motorgehäuse 2 wäre identisch. Der Pumpenstator 7 des Stator/Rotorsatzes SR1 weist denselben Querschnitt auf wie die zweite Stufe des Pumpengehäuses 1, ist jedoch kürzer ausgebildet. Vorzugsweise beträgt der Unterschied und somit der maximale Verschiebeweg 5-10 mm. Der Stator 7 weist eine mindestens annähernd kreisförmige zentrale Öffnung mit einer inneren Lauffläche 70 auf, in welcher der zugehörige Rotor 6 angeordnet ist. Eine Einzelansicht eines Rotors 6 ist in Figur 4 ersichtlich. Der Rotor 6 sitzt dabei auf der Antriebswelle P, deren äusserer Umfang verzahnt ist. Der Pumpenrotor 6 weist hierfür eine Aufnahmeöffnung für die Antriebswelle P auf, welche in diesem Bereich ebenfalls verzahnt ist. Der Pumpenrotor 6 wird mittels der Antriebswelle P angetrieben.

Der Rotor 6 weist mehrere über dem Umfang gleichmässig verteilte Ausnehmungen auf, in welchen kolbenförmige Flügelkolben 60 radial verschiebbar gelagert sind. Mittels dieser Flügelkolben 60 läuft der Rotor 6 auf der inneren Lauffläche 70 des Stators 7 ab, wobei das Pumpenfluid von einer antriebsseitigen Saugseite des Stator/Rotorsatzes SR1 zur gegenüberliegenden Druckseite des Satzes SR1 gepumpt wird. Pumpenfluid, welches sich zwischen Stator 7 und Rotor 6 befindet, wird durch die Rotationsbewegung des Rotors 6 ebenfalls in eine Kreisbahn gezwungen.

Erfindungsgemäss lässt sich nun der Stator 7 durch den Öldruck und/oder die durch die Rotation des Öls entstehende Coriolis- oder Fliehkraft in seinem Abstand zum Rotor 6 verändern. Hierfür besteht der Stator 7, welcher vorzugsweise aus Metall oder einem anderen steifen Material gefertigt ist, aus mindestens zwei Teilstücken. Eines davon ist in Figur 3a dargestellt. Im hier beschriebenen Beispiel besteht der Stator 7 aus genau zwei Teilstücken 71, 72, welche im wesentlichen spiegelsymmetrisch zueinander aufgebaut sind und deren Lage zueinander druck- und/oder fliehkraftbedingt veränderbar ist. Dabei wird die Kreisform der Lauffläche 70 in zwei diagonal entgegengesetzten Richtungen auseinandergespreizt. In Figur 2 ist eine leicht auseinandergespreizte Position dargestellt. Jedes der Teilstücke 71, 72 weist, wie in Figur 3b sichtbar ist, diagonal entgegengesetzte Verzahnungen 73 auf, welche mit Verzahnungen des benachbarten oder anderen Teilstückes in Eingriff bringbar sind. Dadurch lässt sich der Stator 7 druck- und/oder fliehkraftbedingt geführt auseinanderziehen und wieder zusammenziehen.

Der erfindungsgemässe Drehmomentwandler verfügt ferner über Mittel, um diese Bewegung zu regeln und zu begrenzen. Einerseits ist hierfür in der Nase 74 des Stators 7 eine Rückstellfeder 75 angeordnet, welche den Stator in radialer Richtung zur Achse der Antriebswelle P hin kraftbeaufschlagt. Andererseits ist beidseitig der Nase, ebenfalls in der kürzeren Seite des Stators 7 je ein Regelkolben 76, 77 angeordnet. Im Bereich dieser Regelkolben 76, 77 weist der Stator 7 radial verlaufende Regelungs-Durchlassöffnungen 78 auf, welche den Kolben 76, 77 mit einer durch den Abstand zwischen Rotor 6 und Stator 7 gebildeten Kammer hydraulisch verbindet. Sind, wie hier dargestellt, genau zwei Teilstücke 71, 72 vorhanden, so genügen je zwei Regelungs-Durchlassöffnungen 78 pro Teilstück und je zwei zugehörige Regelkolben 76, 77. Vorzugsweise weist jede Öffnung 78 eines Teilstücks 71, 72 ein diagonal entgegengesetztes Pendant im anderen Teilstück 71, 72 auf. Zudem sind die zwei in demselben Teilstück angeordneten Öffnungen 78 spiegelsymmetrisch bezüglich einer Mittellinie L angeordnet. Diese Mittellinie L schneidet die Achse der Antriebswelle P und verläuft senkrecht bezüglich einer Trennungsebene T der zwei Teilbereiche. Je einer der Kolben 76, 77, hier der mit der Ziffer 76 bezeichnete, dient zur Regelung der Flüssigkeits-Hubmenge bei einer Beschleunigung und der mit der Ziffer 77 gekennzeichnete Kolben der Regelung bei einer Verzögerung. Dabei regeln diagonal entgegengesetzte Kolben dieselbe Antriebsart.

Die pumpenseitige und die motorseitige Druckplatte 5, 5' sowie die mittlere Steuerplatte 30 weisen, wie dies in den Figuren 6a,b,c und Figur 7 dargestellt ist, Längskanäle 50, 31 auf, welche in Umfangsrichtung des jeweiligen Rotors 6,6' verlaufen. Zudem weisen die pumpenseitige und die motorseitige Steuerplatte 5, 5' je mindestens eine kreisförmige Steueröffnung 51 auf, welche mit den Flügelkolben 60 des Rotors 6 in hydraulisch kommunizierender Verbindung stehen. Benachbart zu den Kanälen und Öffnungen 50/51 der Druckplatten 5, 5' sind Druckkissen 50' 51' angeordnet, um eine axiale Abdichtung zwischen Rotor und Stator zu gewährleisten.

Die Längskanäle 50, 31 der drei Platten 5, 5' , 30 sind vorzugsweise in einer Linie hintereinander angeordnet. Dabei weist jede Platte 5, 5', 30 vorzugsweise vier über ihren Umfang gleichmässig verteilte Längskanäle 50, 31 auf. Die Druckplatten 5, 5' sind dabei so angeordnet, dass sie im Bereich der Regelungs-Durchlassöffnungen 78 zu liegen kommen. Diese Längskanäle 50, 31 sind mit der Pumpkammer verbunden, so dass die zwei Stator/Rotorsätze RS1 und RS2 in hydraulisch kommunizierender Verbindung stehen. Durch die Lageveränderung der Stators 7 lassen sich die Grösse der Öffnung und somit die Durchlassmenge variieren.

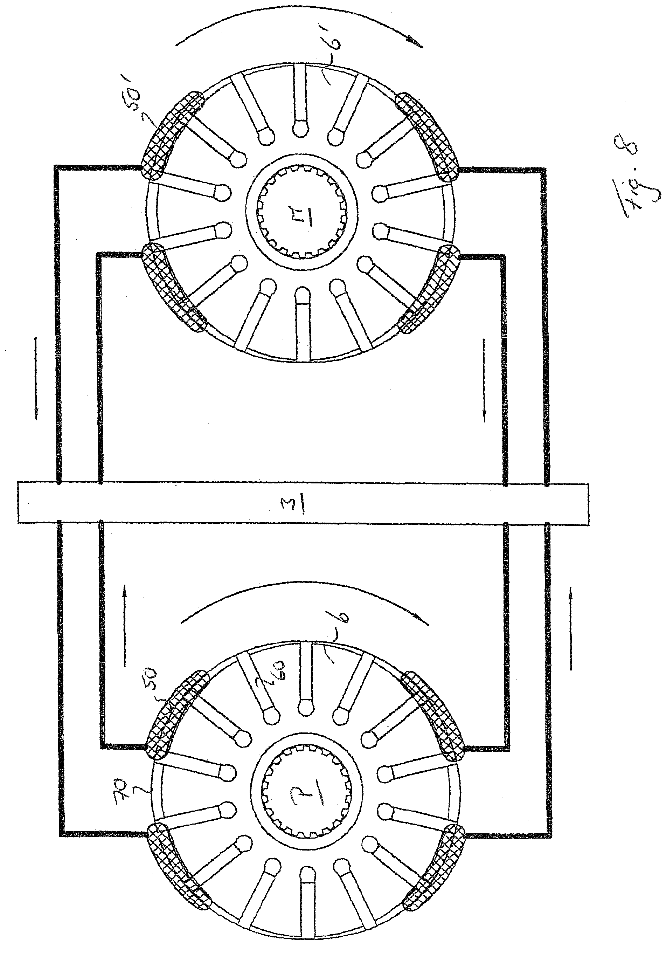

Wie oben beschrieben lässt sich regeln, wie weit der Stator 7 vom Druck des Pumpenfluids wie auch von der durch ihre Rotation erzeugten Fliehkraft auseinandergedrückt wird. Da sich der Pumpenstator 7 und der Motorstator 7' getrennt regeln lassen, kann durch unterschiedliche Abstände ein stufenloses Getriebe erreicht werden. Beispielsweise wird bei einer Beschleunigung der Öldruck, welcher auf den Pumpenstator 7 wirkt, erhöht. Drücken nun die Regelkolben 76 für die Beschleunigung auf den Pumpenstator 7, so geht der Druck auf den Motorstator 7' über, welcher entsprechend seiner Regelung auseinandergedrückt wird. Die Verzögerung erfolgt im umgekehrten Sinne. Eine entsprechende Beschleunigung ist in Figur 8 schematisch dargestellt, wobei die Pfeile den Ölfluss darstellen.

Die erfindungsgemässe Vorrichtung ermöglicht eine kostengünstige Herstellung eines stufenlosen Getriebes, welches zudem einfach regelbar ist und eine optimierte Kraftübertragung aufweist.

### Bezugszeichenliste

- P: Pumpenwelle
- M: Motorwelle
- G: Gehäuse
- L: Mittellinie
- T: Trennungsebene
- SR1: erster Flügelzellen-Stator/Rotorsatz
- SR2: zweiter Flügelzellen-Stator/Rotorsatz
- 1: Pumpengehäuse
- 10: Nase
- 2: Motorgehäuse
- 3: Steuergehäuse
- 30: mittlere Steuerplatte
- 31: Längskanal
- 4: Steuerpumpe
- 40: Eingangsöffnung
- 41: Auslassöffnung
- 42: Steuerkanal
- 5: Pumpenseitige Druckplatte
- 5': Motorseitige Druckplatte
- 50: Längskanal
- 50': Druckkissen
- 51: Steueröffnung
- 51': Druckkissen
- 6: Pumpenrotor
- 60: Flügel
- 6': Motorrotor
- 7: Pumpenstator
- 70: innere Lauffläche
- 71: erstes Teilstück
- 72: zweites Teilstück
- 73: Verzahnung
- 74: Nase
- 75: Rückstellfeder
- 76: Regelkolben für die Beschleunigung
- 77: Regelkolben für die Verzögerung
- 78: Regelungs-Durchlassöffnungen
- 7': Motorstator

## Patentansprüche

1. Hydraulischer Drehmomentwandler mit einem Gehäuse (G),einem im Gehäuse (G) angeordneten ersten Flügelzellen-Stator/Rotorsatz (SR1) mit äusserer Flügelkolbenabstützung und einem im Gehäuse (G) angeordneten zweiten Flügelzellen-Stator/Rotorsatz (SR2) mit äusserer Flügelkolbenabstützung, wobei ein Rotor (6) des ersten Stator/Rotorsatzes (SR1) mit einer Antriebswelle (P) verbindbar ist und ein Rotor (6') des zweiten Stator/Rotorsatzes (SR1) mit einer Abtriebswelle (M) verbindbar ist,
wobei der erste und zweite Stator/Rotorsatz (SR1, SR2) in hydraulisch kommunizierender Verbindung stehen,
wobei der erste und zweite Stator/Rotorsatz (SR1, SR2) in axialer Richtung der An- und Abtriebswellen (P,M) hintereinander angeordnet sind,
wobei mindestens einer der Stator/Rotorsätze (SR1, SR2) einen Stator (7,7') aufweist, dessen Abstand zum zugehörigen Rotor (6,6') druck- und/oder fliehkraftbedingt in mindestens einer radialen Richtung veränderbar ist,
wobei Mittel (75, 76, 77) vorhanden sind, um den Abstand zum zugehörigen Rotor (6,6') zu regeln,
wobei auf beiden Seiten der zwei Stator/Rotorsätzen (SR1, SR2) je eine Pumpen- bzw. Motordruckplatte (5,5') angeordnet ist,
wobei zwischen den zwei Stator/Rotorsätzen (SR1, SR2) eine mittlere Steuerplatte (30) angeordnet ist,
wobei die Druckplatten (5,5') und die Steuerplatte (30) mindestens jeweils einen in Umfangsrichtung der Rotoren (6,6') verlaufenden Längskanal (50, 31) aufweisen, wobei die durch die die Druckplatten(5,5') und die Steuerplatte (30) verlaufenden Längskanäle (50, 31) die hydraulische Verbindung zwischen den Stator/Rotorsätzen (SR1, SR2) bilden,
**dadurch gekennzeichnet, dass** die Mittel zur Regelung des Abstandes mindestens einen Regelkolben (76, 77) umfassen und dass eine Regelungs-Durchgangsöffnung (78) im Stator (7,7') angeordnet ist, welche den zugehörigen Rotor (6,6') hydraulisch mit dem Regelkolben (76, 77) verbindet.

2. Drehmomentwandler nach Anspruch 1, **dadurch gekennzeichnet, dass** alle Stator/Rotorsätze (SR1, SR2) einen Stator (7,7') aufweisen, dessen Abstand zum zugehörigen Rotor (6,6') druck- und/oder fliehkraftbedingt veränderbar ist und unabhängig voneinander regelbar ist.

3. Drehmomentwandler nach Anspruch 1, **dadurch gekennzeichnet, dass** der Stator (7,7') mit veränderbarem Abstand eine kreisförmige Lauffläche (71) für den innerhalb des Stators (7,7') angeordneten, zugehörigen Rotor (6,6') aufweist, wobei die Kreisform der Lauffläche (71) druck- und/oder fliehkraftbedingt in zwei diagonal entgegengesetzte Richtungen spreizbar ist.

4. Drehmomentwandler nach Anspruch 1, **dadurch gekennzeichnet, dass** der Stator (7,7') mit veränderbarem Abstand aus mindestens zwei Teilbereichen (71, 72) besteht, deren Lage zueinander druck- und/oder fliehkraftbedingt veränderbar ist.

5. Drehmomentwandler nach den Ansprüchen 3 und 4, **dadurch gekennzeichnet, dass** die mindestens zwei Teilbereiche (71, 72) des Stators (7,7') symmetrisch aufgebaut sind, dass jeder Teilbereich (71, 72) Verzahnungen (73) aufweist, welche mit den Verzahnungen des anderen Teilbereiches (71, 72) in Eingriff stehen.

6. Drehmomentwandler nach Anspruch 1, **dadurch gekennzeichnet, dass** das Mittel zur Regelung des Abstandes mindestens eine Rückstellfeder (75) umfasst, welche den Stator (7,7') in radialer Richtung zur Achse der Antriebs- bzw. Abtriebsachse (P,M) hin kraftbeaufschlagt.

7. Drehmomentwandler nach Anspruch 4, **dadurch gekennzeichnet, dass** genau zwei Teilbereiche (71, 72) des Stators (7,7') vorhanden sind,
dass vier Regelungs-Durchgangsöffnungen (78) vorhanden sind, wobei je zwei Regelungs-Durchgangsöffnungen (78) diagonal entgegengesetzt zueinander in unterschiedlichen Teilbereichen (71, 72) angeordnet sind,
dass die zwei in demselben Teilbereich (71, 72) angeordneten Regelungs-Durchgangsöffnungen (78) spiegelsymmetrisch bezüglich einer Mittellinie (L) angeordnet sind, wobei die Mittellinie (L) die Achse der Antriebs- bzw. Abtriebswelle (P,M) schneidet und senkrecht bezüglich einer Trennungsebene (T) der zwei Teilbereiche (71, 72) verläuft und
dass eine erste der zwei Regelungs-Durchgangsöffnungen jedes Teilbereiches (71, 72) eine Beschleunigung und die zweite der zwei Regelungs-Durchgangsöffnungen (78) eine Verzögerung regelt, wobei die zwei diagonal entgegengesetzt zueinander angeordneten Regelungs-Durchgangsöffnungen (78) dieselbe Antriebsart regeln.

8. Drehmomentwandler nach Anspruch 1, **dadurch gekennzeichnet, dass** die Pumpensteuerplatte (5) und die Motordruckplatte (5') zentrisch um die Achse der Antriebs- bzw. Abtriebswelle (P,M) verlaufende Steueröffnungen (51) aufweisen, welche mit Flügelkolben (60) des Rotors (6,6') in hydraulisch kommunizierender Verbindung stehen.

## Claims

1. A hydraulic torque converter with a housing (G), a first vane cell stator/rotor set (SR1) arranged in the housing (G), with outer vane piston support, and a second vane cell stator/rotor set (SR2) arranged in the housing (G), with outer vane piston support, wherein a rotor (6) of the first stator/rotor set (SR1) can be connected to a driveshaft (P), and a rotor (6') of the second stator/rotor set (SR1) can be connected to an output shaft (M), wherein the first and second stator/rotor sets (SRI, SR2) are in hydraulically communicating connection, wherein the first and second stator/rotor sets (SRI, SR2) are arranged one behind the other in the axial direction of the driveshaft and output shaft (P, M), wherein at least one of the stator/rotor sets (SRI, SR2) comprises a stator (7, 7'), the spacing of which from the associated rotor (6, 6') can be varied in at least one radial direction on the basis of pressure and/or centrifugal force, wherein means (75, 76, 77) are provided for regulating the spacing from the associated rotor (6, 6'), wherein on both sides of the two stator/rotor sets (SRI, SR2), a respective pump pressure plate or motor pressure plate (5, 5') is arranged, wherein a central control plate (30) is arranged between the two stator/rotor sets (SRI, SR2), wherein the pressure plates (5, 5') and the control plate (30) comprise at least one longitudinal channel (50, 31) extending in the peripheral direction of the rotors (6, 6'), wherein the longitudinal channels (50, 31) extending across the pressure plates (5, 5') and the control plate (30) form the hydraulic connection between the stator/rotor sets (SRI, SR2), **characterized in that** the means for regulating the spacing comprises at least one regulator piston (76, 77) and that a regulation passage opening (78), which hydraulically connects the associated rotor (6, 6') to the regulator piston (76, 77), is arranged in the stator (7, 7').

2. The torque converter according to Claim 1, **characterized in that** all the stator/rotor sets (SRI, SR2) comprise a stator (7, 7'), the spacing of which from the associated rotor (6, 6') can be varied on the basis of pressure and/or centrifugal force and can be regulated independently of one another.

3. The torque converter according to Claim 1, **characterized in that** the stator (7, 7') with variable spacing has a circular running surface (71) for the associated rotor (6, 6') arranged within the stator (7, 7'), wherein the circular shape of the running surface (71) can be splayed in two diagonally opposite directions on the basis of pressure and/or centrifugal force.

4. The torque converter according to Claim 1, **characterized in that** the stator (7, 7') with variable spacing consists of at least two sections (71, 72), the position of which with respect to one another can be varied on the basis of pressure and/or centrifugal force.

5. The torque converter according to Claims 3 and 4, **characterized in that** the at least two sections (71, 72) of the stator (7, 7') are constructed symmetrically, and that each section (71, 72) has indentations (73) which are in engagement with the indentations of the other section (71, 72).

6. The torque converter according to Claim 1, **characterized in that** the means for regulating the spacing comprises at least one return spring (75) which applies force to the stator (7, 7') in a radial direction toward the axis of the driveshaft or output shaft (P, M).

7. The torque converter according to Claims 4, **characterized in that** precisely two sections (71, 72) of the stator (7, 7') are present, **in that** four regulation passage openings (78) are present, wherein in each case two regulation passage openings (78) are arranged diagonally opposite one another in different sections (71, 72), **in that** the two regulation passage openings (78) arranged in the same section (71, 72) are arranged mirror symmetrically with respect to a center line (L), wherein the center line (L) intersects the axis of the driveshaft or output shaft (P, M) and extends vertically with respect to a separation plane (T) of the two sections (71, 72), and **in that** a first of the two regulation passage openings of each section (71, 72) regulates an acceleration and the second of the two regulation passage openings (78) regulates a deceleration, wherein the two regulation passage openings (78) arranged diagonally opposite one another regulate the same type of drive.

8. The torque converter according to Claim 1, **characterized in that** the pump control plate (5) and the motor pressure plate (5') have control openings (51) which extend centrally around the axis of the driveshaft or output shaft (P, M) and which are in hydraulically communicating connection with vane pistons (60) of the rotor (6, 6').

## Revendications

1. Convertisseur de couple hydraulique comprenant un carter (G), un premier ensemble stator/rotor à cellules à ailettes (SR1) disposé dans le carter (G) avec un support de piston à ailettes externe et un deuxième ensemble stator/rotor à cellules à ailettes (SR2) disposé dans le carter (G) avec un support externe de piston à ailettes, un rotor (6) du premier ensemble stator/rotor (SR1) pouvant être relié à un arbre d'entraînement (P) et un rotor (6') du deuxième ensemble stator/rotor (SR1) pouvant être relié à un arbre de sortie (M),
où les premier et second ensembles stator/rotor (SRI, SR2) sont en communication de communication hydraulique l'un avec l'autre,
où les premier et second ensembles stator/rotor (SRI, SR2) étant disposés l'un derrière l'autre dans la direction axiale des arbres d'entrée et de sortie (P, M),
où au moins l'un des ensembles stator/rotor (SRI, SR2) comportant un stator (7, 7') dont la distance par rapport au rotor associé (6, 6') peut être modifiée dans au moins une direction radiale par la pression et/ou la force centrifuge,
où des moyens (75, 76, 77) sont prévus pour commander la distance au rotor associé (6,6'),
où, des deux côtés des deux ensembles stator/rotor (SRI, SR2), une plaque de pression de pompe ou de moteur (5, 5') est disposée à chaque fois,
où une plaque de commande centrale (30) est disposée entre les deux ensembles stator/rotor (SRI, SR2),
où les plaques de pression (5, 5') et la plaque de commande (30) ont chacune au moins un canal longitudinal (50, 31) s'étendant dans la direction circonférentielle des rotors (6,6'), les canaux longitudinaux (50, 31) traversant les plaques de pression (5, 5') et la plaque de commande (30) formant la liaison hydraulique entre les ensembles stator/rotor (SRI, SR2),
**caractérisé en ce que** les moyens de régulation de la distance comprennent au moins un piston de régulation (76, 77) et **en ce qu'**une ouverture de passage de régulation (78) est disposée dans le stator (7, 7') qui relie hydrauliquement le rotor associé (6,6') au piston de régulation (76, 77).

2. Convertisseur de couple selon la revendication 1, **caractérisé en ce que** tous les ensembles stator/rotor (SRI, SR2) présentent un stator (7, 7') dont la distance par rapport au rotor associé (6, 6') peut être modifiée par la pression et/ou par la force centrifuge et qui peut être réglée indépendamment les uns par rapport aux autres.

3. Convertisseur de couple selon la revendication 1, **caractérisé en ce que** le stator (7, 7') présente une surface de roulement circulaire (71) à écartement variable pour le rotor associé (6, 6') disposé à l'intérieur du stator (7, 7'), la forme circulaire de la surface de roulement (71) pouvant être étalée dans deux directions opposées en diagonale par la pression et/ou la force centrifuge.

4. Convertisseur de couple selon la revendication 1, **caractérisé en ce que** le stator (7, 7') présente au moins deux zones partielles (71, 72) à écartement variable, dont la position relative des zones partielles peut être modifiée par pression et/ou par force centrifuge.

5. Convertisseur de couple selon les revendications 3 et 4, **caractérisé en ce que** les au moins deux zones partielles (71, 72) du stator (7, 7') sont construites symétriquement, **en ce que** chaque zone partielle (71, 72) présente des dentures (73) qui s'engrène avec les dentures de l'autre zone partielle (71, 72).

6. Convertisseur de couple selon la revendication 1, **caractérisé en ce que** les moyens de régulation de la distance comprennent au moins un ressort de rappel (75) qui applique une force au stator (7, 7') dans la direction radiale vers l'axe de l'axe (P, M) d'entrée ou de sortie.

7. Convertisseur de couple selon la revendication 4, **caractérisé** :
**en ce que** exactement deux régions partielles (71, 72) du stator (7, 7') sont présentes,
**en ce que** quatre ouvertures de passage de commande (78) sont présentes, où deux ouvertures de passage de commande (78) sont disposées en diagonale l'une en face de l'autre dans des zones partielles différentes (71, 72),
**en ce que** les deux ouvertures de passage de commande (78) disposées dans la même région partielle (71, 72) sont disposées symétriquement par rapport à une ligne médiane (L), où la ligne médiane (L) coupe l'axe de l'arbre d'entrée ou de sortie (P, M) et s'étend perpendiculairement par rapport à un plan de séparation (T) des deux régions (71, 72), et
**en ce qu'**une première des deux ouvertures de passage de commande de chaque zone partielle (71, 72) commande une accélération et la seconde des deux ouvertures de passage de commande (78) commande une décélération, les deux ouvertures de passage de commande (78) étant disposées en diagonale opposée l'une à l'autre et commandant le même type de commande.

8. Convertisseur de couple selon la revendication 1, **caractérisé en ce que** la plaque de commande de pompe (5) et la plaque de pression de moteur (5') présentent des ouvertures de commande (51) qui s'étendent centrées autour de l'axe de l'arbre d'entrée et de l'arbre de sortie (P, M), respectivement, et sont en communication hydraulique avec des pistons (60) du rotor (6,6').
